# FASCICULE DE BREVET EUROPEEN

(11) **EP 1 358 079 B1**
(45) Date de publication et mention de la délivrance du brevet: **21.02.2007**
(21) Numéro de dépôt: 02714123.3
(22) Date de dépôt: 28.01.2002
(51) Int. Cl.: B60C 11/13

(54) **BANDE DE ROULEMENT REDUISANT LE BRUIT DE ROULAGE**
ROLLGERÄUSCH REDUZIERENDE LAUFFLÄCHE
TYRE TREAD THAT REDUCES THE ROLLING NOISE

(30) Priorité: 29.01.2001 FR 0101269
(43) Date de publication de la demande: 05.11.2003
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: MARTIN, Didier, F-63530 Chanat-la-Mouteyre (FR); CLERO, Laurent, F-63000 Clermont-Ferrand (FR); BREDOIRE, Jean-Luc, F-63118 Cebazat (FR)
(74) Mandataire: Diernaz, Christian
(86) Numéro de dépôt international: PCT/EP2002/000852
(87) Numéro de publication internationale: WO 2002/060705

(56) Documents cités:
- WO-A-98/35842
- DE-C- 655 071
- FR-A- 1 580 205
- FR-A- 2 715 891

## Description

L'invention concerne une sculpture de bande de roulement pour pneumatique destiné à équiper des véhicules portant de lourdes charges.

Afin d'obtenir des performances satisfaisantes en utilisation, il est connu de pourvoir une bande de roulement avec une sculpture réalisée par moulage et vulcanisation des matériaux caoutchouteux composant ladite bande. Cette sculpture comporte en règle générale une pluralité de motifs séparés les uns des autres par des rainures destinées à conférer à la bande des qualités d'adhérence appropriées.

On distingue en particulier des rainures dirigées essentiellement dans la direction longitudinale c'est-à-dire dans la direction circonférentielle une fois la bande posée sur un pneumatique et des rainures essentiellement dirigées dans la direction transversale de la bande c'est-à-dire sur la direction axiale sur le pneumatique.

Pour un pneumatique équipé d'une bande de roulement comportant une pluralité de motifs de relief séparés les uns des autres par des rainures transversales, il se produit vers la sortie du passage dans la zone de contact du pneumatique avec le sol, une forte flexion du sommet du pneumatique entraînant une ouverture desdites rainures transversales. Ces mouvements d'ouverture cyclique (à chaque tour de roue) se traduisent par un glissement relatif entre les motifs de relief et le sol conduisant à des usures anormalement prononcées sur les bords des motifs de relief.

Pour limiter ces mouvements d'ouverture tout en maintenant la présence de rainures transversales nécessaires pour l'adhérence du pneumatique et pour l'évacuation de fluide présent sur la chaussée, il est connu (JP6-171318) de prévoir au moment du moulage de la bande et de sa vulcanisation la réalisation par moulage d'une pluralité d'éléments de connexion en gomme pour assurer une liaison mécanique entre les parois principales délimitant les rainures. Pour obtenir un effet mécanique satisfaisant dans le cas d'une sculpture d'une bande de roulement pour pneumatique poids lourd, il est connu de former dans une rainure de profondeur P au moins deux éléments de connexion (ou "ponts de gomme") s'étend sensiblement transversalement à la direction de ladite rainure, lesdits éléments s'étendant dans la rainure à partir d'une profondeur H jusqu'au fond de cette rainure; chacun de ces éléments de connexion a une largeur appropriée pour assurer la tenue mécanique des motifs de relief tout en permettant le maintien d'une longueur d'arête suffisante quel que soit le niveau d'usure de la bande de roulement.

Après usure partielle de la bande de roulement (et avant d'atteindre le niveau d'usure correspondant à la limite d'utilisation de cette bande), ces éléments de connexion viennent en contact avec la chaussée et vont dès lors s'user en même temps que la bande. À partir du moment où les éléments de connexion de gomme viennent en contact avec la chaussée, on a constaté une augmentation particulièrement sensible du bruit émis par le pneumatique, par exemple au cours d'un roulage sur un sol lisse.

Le document FR-A-2 715 891 décrit une bande de roulement selon les préambules des revendications 1 et 4.

L'objet de l'invention est de proposer une bande de roulement pourvue d'une sculpture comportant une pluralité de rainures d'orientation essentiellement transversale délimitant des motifs de relief, cette bande ne présentant pas les inconvénients qui viennent d'être rappelés tout en réduisant de manière sensible les mouvements d'ouverture et de fermeture en entrée et en sortie de l'empreinte de contact entre le pneumatique et la chaussée pour réduire les glissements relatifs entre les motifs de sculpture et la chaussée.

En particulier, la bande de roulement selon l'invention ne présente pas d'augmentation du niveau de bruit dès que les éléments de connexion viennent en contact avec la chaussée après usure partielle de la bande.

Ce problème de bruit est résolu par une bande de roulement selon les revendications 1 et 4. La bande de roulement selon l'invention comporte une sculpture formée par une pluralité de motifs de relief délimités par des rainures de profondeur P orientées dans la direction transversale et dans la direction longitudinale de la bande. Chaque motif comporte une face de contact destinée à venir en contact avec la chaussée pendant le roulage du pneumatique équipé de cette bande et des faces latérales. Une pluralité de motifs sont reliés deux à deux sur leurs faces latérales par au moins deux éléments de connexion en gomme moulés pendant le moulage de la bande, ces éléments de connexion s'étendant à partir d'une profondeur H sous la surface de roulement de la bande de roulement à l'état neuf vers le fond de la rainure de profondeur P.

Les éléments de connexion entre deux motifs de relief délimitent, deux à deux avec les parois desdits motifs, une sorte de réservoir formant une cavité venant se fermer au contact avec la chaussée pour emprisonner et comprimer un volume équivalent d'air dès lors que l'usure de la bande atteint un niveau tel que ces éléments de connexion touchent le sol (c'est-à-dire une usure au moins égale à la profondeur H). La sculpture est telle que pour chaque cavité ainsi formée au moins un élément de gomme délimitant ladite cavité comporte au moins un orifice traversant complètement ledit élément de gomme pour mettre en communication le volume de ladite cavité avec une rainure voisine. Cet orifice est préférentiellement moulé au moment du moulage de la bande de roulement.

Par élément de gomme délimitant une cavité, il faut entendre soit l'un des éléments de connexion des motifs de sculpture soit l'un desdits motifs de sculpture reliés ensemble par lesdits éléments de connexion.

Il est ainsi possible de réaliser une liaison mécanique efficace entre des motifs de relief disposés sur une même rangée longitudinale sur une bande de roulement tout en évitant une augmentation sensible du niveau acoustique lorsque cette bande équipe par exemple un pneumatique et que celle-ci atteint un niveau d'usure mettant en contact les éléments de connexion avec la chaussée. On cumule ainsi les avantages d'une sculpture découpée par des rainures transversales et ceux d'une sculpture comportant des nervures continues.

La forme de la section transversale du ou des orifice(s) est choisie de façon à être pratiquement insensible à la compression de la gomme résultant du contact avec la chaussée qui a tendance à provoquer la fermeture dudit orifice ce qui réduirait sensiblement l'effet recherché voire l'annulerait. Dans cette optique et selon la revendication 1, au moins un orifice a une section de forme allongée dans une direction perpendiculaire ou quasiment perpendiculaire à la surface de roulement de la bande de roulement. Par allongée dans une direction donnée, on entend une forme géométrique dont la longueur maximale se trouve sensiblement orientée dans ladite direction. Des formes elliptiques, rectangulaires ou en losange en sont des exemples particuliers.

Préférentiellement, au moins un orifice s'étend jusqu'à une profondeur au moins égale à la moitié de la différence entre la profondeur P des rainures et la profondeur Hi.

Dans le but d'éviter une trop grande réduction de l'effet de rigidité de liaison mécanique des motifs de la sculpture par des éléments de connexion lorsque les orifices sont prévus sur ces éléments de connexion, il est souhaitable de réduire le plus possible la section de chaque orifice sans que celui-ci ne se ferme. Pour cela, il est préférable de disposer chaque orifice au plus près de l'une des faces en vis-à-vis des motifs de relief reliés par les éléments de connexion pour bénéficier de l'effet de rigidification dû aux motifs de relief eux-mêmes.

Une variante intéressante selon la revendication indépendante 4, consiste à réaliser, sur chaque motif de sculpture relié à un autre motif de sculpture par au moins deux éléments de connexion, au moins un orifice ayant par exemple la forme d'un canal et traversant ledit motif pour déboucher à la fois sur la face latérale dudit motif délimitant une cavité et sur une autre des faces latérales du même motif. Pour faciliter le moulage d'une telle sculpture, il peut être moulé à l'intérieur de chaque motif un canal rempli d'un matériau ayant la caractéristique de s'éliminer dès les premiers kilomètres de roulage, notamment sous l'effet de l'humidité. Une autre possibilité consiste à mouler, dans les motifs de relief, une incision débouchant sur la face de contact de ces motifs (c'est-à-dire la face destinée à être en contact avec le sol pendant le roulage), ladite incision comportant à une distance suffisante sous la surface de roulement, une partie élargie formant canal pour permettre la circulation de l'air.

Bien entendu, il est tout à fait possible de combiner la présence d'orifices sur les motifs de relief et sur les éléments de connexion desdits motifs.

D'autres caractéristiques et avantages de l'invention ressortent de la description faite ci-après en référence aux dessins annexés qui montrent, à titre d'exemples non limitatifs, des formes de réalisation de l'objet de l'invention.
La figure 1 montre deux blocs reliés par deux éléments de connexion en gomme selon l'invention;
la figure 2 montre les mêmes blocs de la figure 1 après une usure suffisante pour que les éléments de connexion de gomme viennent en contact avec la chaussée;
la figure 3 montre une variante de réalisation d'orifices dans un pont de gomme;
la figure 4 montre une autre variante selon laquelle les motifs de sculpture reliés par des éléments de connexion comportent un canal d'évacuation.

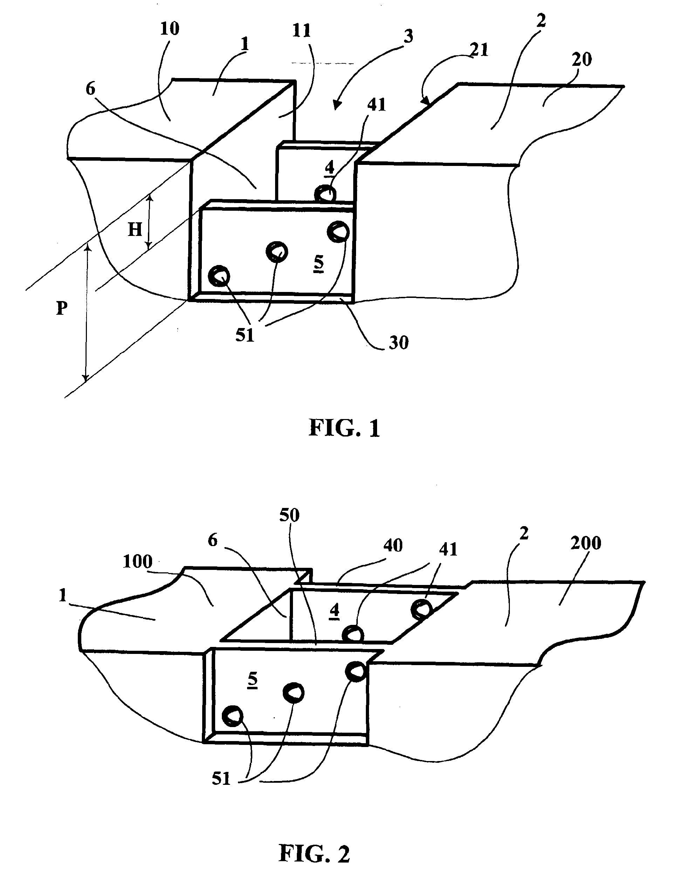

Sur la figure 1, on distingue une vue partielle de deux blocs de gomme 1, 2 d'une sculpture d'une bande de roulement pour un pneumatique de poids lourd. Ces blocs 1, 2 ont chacun à l'état neuf une surface, respectivement 10, 20, destinée à venir en contact avec la chaussée lors du roulage d'un pneumatique équipé avec ladite bande. Ces deux blocs 1 et 2 sont séparés dans la direction longitudinale de la bande par une rainure transversale 3 de profondeur P et de largeur L délimitant des faces principales en vis-à-vis sur lesdits blocs, respectivement 11 et 21.

Afin de rigidifier dans le sens longitudinal la sculpture comportant ces blocs de gomme, il est moulé au moment du moulage de la bande, deux ponts de gomme 4 et 5, chaque pont reliant les faces 11 et 21 en vis-à-vis. Ces ponts prennent naissance sur le fond 30 de la rainure 3 et s'étendent dans le sens de la profondeur P de ladite rainure 3 jusqu'à une même hauteur H sous la surface de roulement. Ces deux ponts 4 et 5 délimitent avec les parois 11 et 21 et le fond 30 de la rainure 3 une cavité 6.

Pour éviter l'émission de bruit au cours d'un roulage quand la bande est usée sur une profondeur au moins égale à la profondeur H telle que les ponts 4, 5 viennent en contact avec la chaussée comme cela est représenté sur la figure 2, chacun desdits ponts de liaison est percé de trois orifices, respectivement 41, 51, mettant en communication la cavité 6 avec le reste de la rainure 3. Sur cette figure 2, l'usure de la bande conduit à la formation de nouvelles surfaces de contact pour chaque bloc 1 et 2, respectivement 100 et 200, lesdites surfaces de contact se trouvant au même niveau que les surfaces supérieures 40 et 50 des ponts 4 et 5. Chaque orifice a une section de petites dimensions comparativement aux dimensions de chaque pont (hauteur et longueur) et est de forme sensiblement circulaire.

De manière pratique, ces orifices sont réalisés au moment du moulage de la bande, par exemple en disposant dans le moule des éléments de moulage orientés sensiblement transversalement par rapport à la bande c'est-à-dire sensiblement dans la direction de la rainure transversale 3 comme cela est par exemple décrit dans la demande internationale WO 98/54009.

Des mesures ont été réalisés sur des pneumatiques de dimension 315/80 R 22,5. Les pneumatiques témoin comportaient des motifs de relief reliés par deux éléments de connexion dépourvus d'orifice tandis que les pneumatiques selon l'invention comportaient des motifs de relief reliés par deux élément de connexion, chacun desdits éléments étant percé d'un orifice de section sensiblement égale à 7 mm². Des mesures de bruit effectuées près du pneumatique, c'est à dire avec un microphone positionné près de l'entrée et de la sortie de l'empreinte de contact, dans un essai de roulage à vitesse stabilisée avec un même véhicule sur une piste en béton lisse, ont montré que dès que les éléments de connexion étaient en contact avec la chaussée, l'énergie acoustique était en moyenne inférieure de 5 dBA pour les pneumatiques selon l'invention. Un gain similaire était également obtenu dans un essai de roulage sous couple, pour des couples compris entre 140 et 250 m.daN par pneumatique. Les pneumatiques selon l'invention réduisent de façon importante l'effet de pompage de l'air dans les cavités formées par les éléments de connexion en évitant tout effet de succion particulièrement sensible sur un sol lisse et fermé, c'est à dire sans possibilité pour l'air emprisonné dans ces cavités de s'échapper.

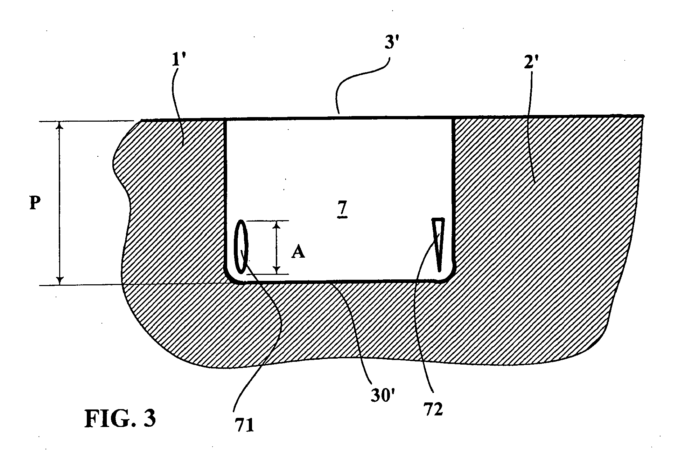

Dans la variante représentée à la figure 3, il est représenté deux variantes de géométries d'orifice présentant des avantages qui décrits dans ce qui suit. Pour éviter que les orifices ne se referment sous les pressions de contact existant entre les ponts de gomme et la chaussée lorsque l'usure de la bande est suffisant, il est préférable de réaliser des orifices ayant des sections de forme allongée sensiblement dans la direction de la hauteur du pont (c'est-à-dire dans la direction de la profondeur de la rainure). Par allongée sensiblement dans la direction de la hauteur, on doit entendre une forme dont la plus grande des dimensions est orientée avec ladite direction ou encore fait un angle faible (inférieur à 45°) avec ladite direction.

Deux blocs 1' et 2', vus en coupe longitudinale, sont reliés par deux ponts de gomme s'étendant à partir du fond 30' de la rainure 3' délimitant lesdits blocs (seul un pont 7 est montré); ce pont 7 comporte deux orifices 71 et 72 ayant chacun une forme allongée, l'un étant de forme elliptique et l'autre de forme triangulaire, les grands côtés de longueur A étant orientés sensiblement dans la direction de la profondeur.

En outre et pour réduire encore le risque de fermeture, il est judicieux de disposer ces orifices au plus près des parois en vis-à-vis des blocs 1 et 2 comme cela est montré sur cette figure 3, afin que la rigidité de compression des blocs 1 et 2 dans le sens de l'épaisseur desdits blocs s'oppose à la fermeture de ces orifices.

Dans la variante montrée sur la figure 3, les ponts de gomme ont, à l'état neuf de la bande, une hauteur H égale à la profondeur P de la rainure 3 de sorte qu'ils sont en contact avec la chaussée dès l'état neuf.

Bien entendu un seul des orifices montré est suffisant pour éviter que la cavité soit totalement close au moment du passage dans le contact..

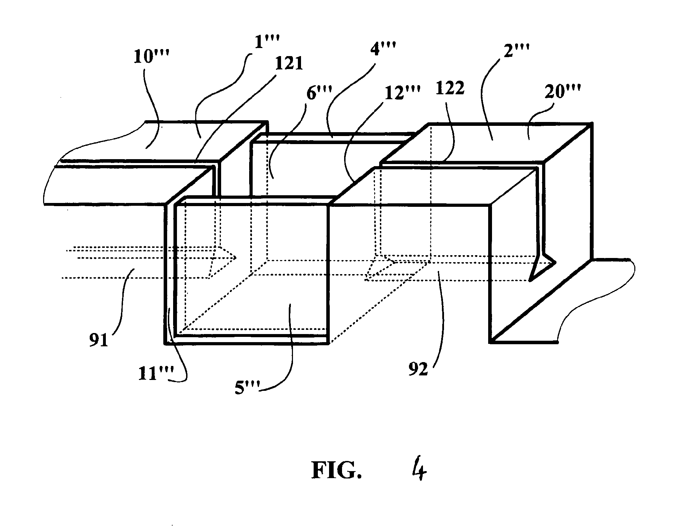

Une autre variante conforme à l'invention est décrite avec le support de la figure 4. Chacun des deux blocs de gomme 1 "' et 2"' montrés sur cette figure 4 comprend une face de contact 10"', 20"' destinée à venir en contact avec le sol pendant le roulage et quatre faces latérales, deux desdites faces latérales 11"' et 21"' étant reliées mécaniquement par deux éléments de connexion 4"' et 5"' dépourvus d'orifice. Pour éviter d'emprisonner de l'air dans la cavité 6"' formée par les faces latérales des blocs en vis-à-vis et les éléments de connexion 4"' et 5"' au moment où ces éléments sont en contact avec la chaussée après usure partielle des blocs 1"' et 2"', ces blocs sont pourvus d'un canal 91, 92 débouchant dans la cavité 6"'. Chaque canal 91, 92 de section triangulaire débouche par ailleurs sur la face latérale opposée du bloc et est prolongé vers la surface de contact 10"', 20"' dudit bloc par une incision 121, 122 de faible largeur, c'est à dire d'une largeur au plus égale à 3 mm. Ce canal est bien sûr positionné dans l'épaisseur du bloc à une profondeur telle qu'il est efficace pour que l'air emprisonné dans la cavité puisse s'échapper dès lors que les éléments de connexion 4"', 5"' sont en contact avec le sol. L'exemple montre que chaque canal débouche sur des faces latérales opposées, mais il est également possible de faire déboucher ce canal sur des faces ayant une arête commune. La réalisation d'une telle sculpture de bande de roulement peut se faire au moment du moulage de cette bande en employant des éléments moulants de type lamelle pourvu d'une partie élargie à leur extrémité pour le moulage d'un canal.

Une autre variante consiste à prévoir qu'un seul des deux blocs est pourvu d'un canal. Une autre variante de réalisation consiste à former un canal qui suit une trajectoire non rectiligne et de le prolonger vers l'une des faces du bloc par une incision ayant une géométrie en zigzag ou ondulante dans une ou plusieurs directions. Il est ainsi possible de limiter la diminution de rigidité à la sculpture liée à la présence d'une incision dans les blocs.

Pour augmenter encore l'efficacité d'évacuation, il est possible de combiner à la fois la présence de canal dans les motifs de relief et d'orifices dans les éléments de connexion.

L'invention qui vient d'être décrite au moyen d'exemples n'est bien sûr pas limitée à ces exemples et diverses modifications peuvent y être apportées sans sortir de son cadre.

## Revendications

1. - Bande de roulement pour pneumatique comportant une sculpture formée par une pluralité de motifs de relief (1, 2) délimités par des rainures (3) de profondeur P orientées dans la direction transversale et dans la direction longitudinale de la bande, chacun de ces motifs (1, 2) comprenant une face de contact (10, 20) et des faces latérales (11, 21), une pluralité de ces motifs de relief étant reliés deux à deux par au moins deux éléments de connexion en gomme (4, 5) moulés pendant le moulage de la bande, ces éléments de connexion s'étendant à partir d'une profondeur (H) sous la surface de roulement de la bande de roulement à l'état neuf vers le fond de la rainure et délimitant, avec les parois en vis-à-vis (11, 21) des motifs de relief auxquels ils sont liés, une cavité (6) venant se fermer au contact avec la chaussée dès lors que l'usure de la bande atteint un niveau d'usure égal à (H), au moins un élément de gomme (motif de relief ou élément de connexion) délimitant ladite cavité comportant au moins un orifice (41, 51, 71, 72, 84) traversant en totalité ledit élément de gomme pour mettre en communication le volume de ladite cavité avec une rainure, cette bande de roulement étant **caractérisée en ce que** chaque orifice (41, 51, 71, 72, 84) a une section transversale non nulle, au moins un orifice (71, 72) ayant une forme allongée dans une direction perpendiculaire ou quasi perpendiculaire à la surface de roulement de la bande..

2. - Bande de roulement selon la revendication 1 **caractérisée en ce que** les orifices (71, 72) sont réalisés sur au moins un élément de connexion entre deux motifs de relief et **en ce que** lesdits orifices sont disposés au plus près de l'une des faces en vis-à-vis desdits motifs.

3. - Bande de roulement selon l'une des revendications 1 ou 2 **caractérisée en ce que** au moins un orifice s'étend jusqu'à une profondeur au moins égale à la moitié de la différence entre la profondeur P des rainures et la profondeur H.

4. - Bande de roulement pour pneumatique comportant une sculpture formée par une pluralité de motifs de relief (1"', 2"') délimités par des rainures (3"') de profondeur P orientées dans la direction transversale et dans la direction longitudinale de la bande, chacun de ces motifs (1"', 2"') comprenant une face de contact (10"', 20"') et des faces latérales (11"', 21"'), une pluralité de ces motifs de relief étant reliés deux à deux par au moins deux éléments de connexion en gomme (4"', 5"') moulés pendant le moulage de la bande, ces éléments de connexion s'étendant à partir d'une profondeur (H) sous la surface de roulement de la bande de roulement à l'état neuf vers le fond de la rainure et délimitant, avec les parois en vis-à-vis (11"', 21"') des motifs de relief auxquels ils sont liés, une cavité (6"') venant se fermer au contact avec la chaussée dès lors que l'usure de la bande atteint un niveau d'usure égal à (H), au moins un élément de gomme (motif de relief ou élément de connexion) délimitant ladite cavité comportant au moins un orifice (91, 92) traversant en totalité ledit élément de gomme pour mettre en communication le volume de ladite cavité (6"') avec une rainure, cette bande de roulement étant **caractérisée en ce que** chaque orifice (91, 92) a une section transversale non nulle, et **en ce que** l'un au moins des motifs de relief (1"', 2"') est pourvu d'un canal (91, 92) débouchant sur deux des faces latérales (11"', 12"') dudit motif, ledit canal étant situé sous la surface de roulement à une profondeur telle qu'il met la cavité (6"') formée par les éléments de connexion (4"', 5"') en communication avec une rainure pour éviter la compression de l'air contenu dans ladite cavité.

5. - Bande de roulement selon la revendication 5 **caractérisée en ce que** chaque canal est prolongé vers la face de contact du motif de relief par une incision.

6. - Bande de roulement selon l'une quelconque des revendications 1 à 6 **caractérisée en ce que** la profondeur H est nulle.

7. -. Pneumatique pourvu d'une bande de roulement selon l'une des revendications 1 à 7 et destiné à une utilisation sur un véhicule poids lourd.

## Claims

1. A tyre tread comprising a tread pattern formed by a plurality of motifs in relief (1, 2) which are defined by grooves (3) of depth P which are oriented in the transverse direction and in the longitudinal direction of the tread, each of these motifs (1, 2) comprising a contact face (10, 20) and lateral faces (11, 21), a plurality of these motifs in relief being connected two by two by at least two rubber connecting elements (4, 5) moulded during the moulding of the tread, these connecting elements extending from a depth (H) beneath the running surface of the tread when new towards the bottom of the groove and defining, with the opposing walls (11, 21) of the motifs in relief to which they are connected, a cavity (6) which closes in contact with the roadway once the wear of the tread reaches a level of wear equal to (H), at least one rubber element (motif in relief or connecting element) defining said cavity comprising at least one orifice (41, 51, 71, 72, 84) passing through the whole of said rubber element to cause the volume of said cavity to communicate with a groove, this tread being **characterised in that** each orifice (41, 51, 71, 72, 84) has a cross-section other than zero, at least one orifice (71, 72) having an elongated form in a direction perpendicular or virtually perpendicular to the running surface of the tread.

2. A tread according to Claim 1, **characterised in that** the orifices (71, 72) are produced on at least one connecting element between two motifs in relief and **in that** said orifices are arranged as close as possible to one of the opposing faces of said motifs.

3. A tread according to one of Claims 1 or 2, **characterised in that** at least one orifice extends as far as a depth at least equal to half the difference between the depth P of the grooves and the depth H.

4. A tyre tread comprising a tread pattern formed by a plurality of motifs in relief (1"', 2"') which are defined by grooves (3"') of depth P which are oriented in the transverse direction and in the longitudinal direction of the tread, each of these motifs (1"', 2"') comprising a contact face (10"', 20"') and lateral faces (11"', 21"'), a plurality of these motifs in relief being connected two by two by at least two rubber connecting elements (4"', 5"') moulded during the moulding of the tread, these connecting elements extending from a depth (H) beneath the running surface of the tread when new towards the bottom of the groove and defining, with the opposing walls (11"', 21"') of the motifs in relief to which they are connected, a cavity (6"') which closes in contact with the roadway once the wear of the tread reaches a level of wear equal to (H), at least one rubber element (motif in relief or connecting element) defining said cavity comprising at least one orifice (91, 92) passing through the whole of said rubber element to cause the volume of said cavity (6"') to communicate with a groove, this tread being **characterised in that** each orifice (91, 92) has a cross-section other than zero, and **in that** one at least of the motifs in relief (1"', 2"') is provided with a channel (91, 92) opening on to two of the lateral faces (11"', 12"') of said motif, said channel being located beneath the running surface at a depth such that it causes the cavity (6"') formed by the connecting elements (4"', 5"') to communicate with a groove in order to prevent the compression of the air contained in said cavity.

5. A tread according to Claim 5, **characterised in that** each channel is extended towards the contact face of the motif in relief by an incision.

6. A tread according to any one of Claims 1 to 6, **characterised in that** the depth H is zero.

7. A tyre provided with a tread according to one of Claims 1 to 7, intended for use on a heavy vehicle.

## Patentansprüche

1. Laufstreifen für einen Luftreifen, der ein Profil aufweist, das aus einer Vielzahl von Reliefelementen (1, 2) gebildet ist, die durch Rillen (3) einer Tiefe P begrenzt sind, die in Querrichtung und in Längsrichtung des Laufstreifens ausgerichtet sind, wobei jedes Element (1, 2) eine Kontaktfläche (10, 20) und Seitenflächen (11, 21) aufweist, eine Vielzahl dieser Reliefelemente paarweise mit mindestens zwei Verbindungselementen aus Gummi (4, 5) verbunden sind, die während des Formens des Laufstreifens gebildet werden, wobei sich diese Verbindungselemente ab einer Tiefe H unter der Lauffläche des Laufstreifens im Neuzustand zum Boden der Rille erstrecken und mit den gegenüberliegenden Wänden (11, 21) der Reliefelemente, mit denen sie verbunden sind, einen Hohlraum (6) begrenzen, der in Kontakt mit der Straße geschlossen wird, sobald die Abnutzung des Laufstreifens ein Abnutzungsniveau von H erreicht, mindestens ein Gummielement (Reliefelement oder Verbindungselement), das den Hohlraum begrenzt, mindestens eine Öffnung (41, 51, 71, 72, 84) aufweist, die ganz durch das Gummielement hindurchgeht, damit das Volumen des Hohlraums mit einer Rille verbunden wird, wobei der Laufstreifen **dadurch gekennzeichnet ist, dass** die Öffnung (41, 51, 71, 72, 84) einen von Null verschiedenen Querschnitt hat, wobei mindestens eine Öffnung (71, 72) in einer Richtung senkrecht oder fast senkrecht zur Lauffläche des Laufstreifens eine langgestreckte Form aufweist.

2. Laufstreifen nach Anspruch 1, **dadurch gekennzeichnet, dass** die Öffnungen (71, 72) an mindestens einem Verbindungselement zwischen zwei Reliefelementen gebildet sind und **dadurch**, dass die Öffnungen in der Nähe einer der gegenüberliegenden Seiten der Elemente angeordnet sind.

3. Laufstreifen nach Anspruch 1 oder 2, **dadurch gekennzeichnet, dass** mindestens eine Öffnung sich bis zu einer Tiefe erstreckt, die mindestens gleich dem mittleren Abstand der Tiefe P der Rillen und der Höhe H ist.

4. Laufstreifen für einen Luftreifen, der ein Profil aufweist, das aus einer Vielzahl von Reliefelementen (1"', 2"') gebildet ist, die durch Rillen (3"') einer Tiefe P begrenzt sind, die in Querrichtung und in Längsrichtung des Laufstreifens ausgerichtet sind, wobei jedes Element (1"', 2"') eine Kontaktfläche (10"', 20"') und Seitenflächen (11"', 21"') aufweist, eine Vielzahl dieser Reliefelemente paarweise mit mindestens zwei Verbindungselementen aus Gummi (4"', 5"') verbunden sind, die während des Formens des Laufstreifens gebildet werden, wobei sich diese Verbindungselemente ab einer Tiefe H unter der Lauffläche des Laufstreifens im Neuzustand zum Boden der Rille erstrecken und mit den gegenüberliegenden Wänden (11"', 21"') der Reliefelemente, mit denen sie verbunden sind, einen Hohlraum (6"') begrenzen, der in Kontakt mit der Straße geschlossen wird, sobald die Abnutzung des Laufstreifens ein Abnutzungsniveau von H erreicht, mindestens ein Gummielement (Reliefelement oder Verbindungselement), das den Hohlraum begrenzt, mindestens eine Öffnung (91,92) aufweist, die ganz durch das Gummielement hindurchgeht, damit das Volumen des Hohlraums (6"') mit einer Rille verbunden wird, wobei der Laufstreifen **dadurch gekennzeichnet ist, dass** jede Öffnung (91, 92) einen von Null verschiedenen Querschnitt aufweist, und **dadurch**, dass mindestens ein Reliefelement (1"', 2"') mit einem Kanal (91, 92) versehen ist, der an zwei Seitenflächen (11"', 12"') der Einheit mündet, wobei sich der Kanal unter der Lauffläche in einer solchen Tiefe befindet, dass der mit den Verbindungselementen (4"', 5"') gebildete Hohlraum (6"') mit einer Rille verbunden wird, um die Kompression der in dem Hohlraum enthaltenen Luft zu verhindern.

5. Laufstreifen nach Anspruch 5, **dadurch gekennzeichnet, dass** sich jeder Kanal in Richtung der Kontaktfläche des Reliefelements durch einen Einschnitt fortsetzt.

6. Laufstreifen nach einem der Ansprüche 1 bis 6, **dadurch gekennzeichnet, dass** die Höhe H von Null verschieden ist.

7. Luftreifen, der mit einem Laufstreifen nach einem der Ansprüche 1 bis 7 versehen ist und für die Verwendung an einem Schwerlastfahrzeug vorgesehen ist.
